# EUROPEAN PATENT APPLICATION

(11) **EP 4 787 644 A1**
(43) Date of publication of application: **05.08.2026**
(21) Application number: 25200925.3
(22) Date of filing: 08.09.2025
(51) Int. Cl.: H02G 3/00, F16B 45/02, F16L 3/133

(54) **SOLAR CABLE RETENTION AND ROUTING COMPONENTS**

(30) Priority: 29.01.2025 US 202563750900 P; 28.07.2025 US 202519282497
(71) Applicant: HellermannTyton Corporation, Milwaukee, WI 53224 (US)
(72) Inventor: Klos, Scott G., Grafton, Wisconsin (US); Cors, Mark W., St. Francis, Wisconsin (US)
(74) Representative: Hernandez, Yorck

(57) **Abstract**

Disclosed is a solar cable retention and routing component (solar hanger) apparatus for the routing of objects on a support structure. The solar hanger includes a hanger portion and a liner portion. The hanger portion is configured to engage to a support structure and defines a cradle portion that is configured to support an object (e.g., an electrical cable). The liner portion includes a cover portion formed on at least a portion of the cradle portion and at least one retainer portion that extends from the cover portion and is configured to retain the object in the cradle portion.

## Description

### INCORPORATION BY REFERENCE

This application claims the benefit of U.S. Provisional Patent Application Serial No. 63/750,900 filed on January 29, 2025, the disclosure of which is incorporated by reference herein in its entirety.

### BACKGROUND

Photovoltaic systems are widely utilized for generating electrical power. Such systems commonly include one or more panels of photovoltaic cells, often referred to as solar panels, which are mounted on a support structure. In various applications, the solar panels may be fixed in place on the support structure, while in others, the support structure may incorporate a solar tracker to orient the panels towards the Sun. An example solar tracker support structure typically includes one or more column supports and a torque tube rotationally mounted on the column support, with solar panels affixed to the torque tube. The rotation of the torque tube facilitates the orientation of the solar panels.

In a typical photovoltaic system installation, the electrical output from the solar panels is transferred to an electrical grid or an electrical storage device, such as a battery, via one or more electrical cables. These electrical cables, which may include photovoltaic cables, solar panel cables, or harness string cabling, are routed, secured, supported, and/or connected to the support structure of the photovoltaic system using a routing component.

A prevalent type of routing component is a wire hanger, often formed from a bent metal wire or a bent wire rod. These wire hangers typically feature an upper hook structure for connection to the framing of a solar installation and a cable support saddle for receiving electrical cables. The cable support opening of traditional wire hangers may lack adequate options for securely holding and/or retaining the electrical cables within the opening during installation procedures. This deficiency can cause electrical cables to fall out of the opening during activities associated with adding or removing cables. The cable support opening of traditional wire hangers may further lack adequate options for securely holding and/or retaining the electrical cables within the opening during use. For example, as the torque tube and an wire hanger attached thereto rotate, electrical cables may fall out of the opening. Furthermore, the upper hook structure of existing wire hangers may not be configured to align optimally with the desired route of the electrical cables. This can result in a misalignment of the wire hanger on the support structure, potentially compromising the efficiency or neatness of the cable routing.

Thus, there is a continuing need for improved routing components for photovoltaic systems that overcome the aforementioned drawbacks of prior solutions.

### SUMMARY

This document describes techniques and apparatuses for solar cable retention and routing components. One general aspect includes an apparatus that includes a hanger portion configured to engage a support structure. The hanger portion defines a cradle portion that is configured to receive and support an object. The apparatus includes a liner portion that includes a cover portion formed on at least a portion of the cradle portion and at least one retainer portion that extends from the cover portion, which is configured to retain the object in the cradle portion.

This Summary is provided to introduce simplified concepts of techniques and apparatuses for solar cable retention and routing components, which are further described below in the Detailed Description and are illustrated in the Drawings. This Summary is not intended to identify essential features of the claimed subject matter, nor is it intended for use in determining the scope of the claimed subject matter.

### BRIEF DESCRIPTION OF THE DRAWINGS

The details of one or more implementations of techniques and apparatuses for solar cable retention and routing components are described with reference to the following Drawings.
FIG. 1 is a schematic representation of a solar cable retention and routing component (solar hanger).
FIG. 2 is a front side view of a first solar hanger.
FIG. 3 is a perspective view of the first solar hanger of FIG. 2.
FIG. 4 is a top view of the first solar hanger of FIG. 2.
FIG. 5 is a first side view of the first solar hanger of FIG. 2.
FIG. 5A is a sectional view along lines 5A-5A in FIG. 5.
FIG. 6 is a sectional view of a second solar hanger.
FIG. 7 is a first side view of a third solar hanger.
FIG. 8 is a front side view of a fourth solar hanger.
FIGS. 9A-9E illustrate a sequence of rotation during a use of the first solar hanger of FIG. 2.

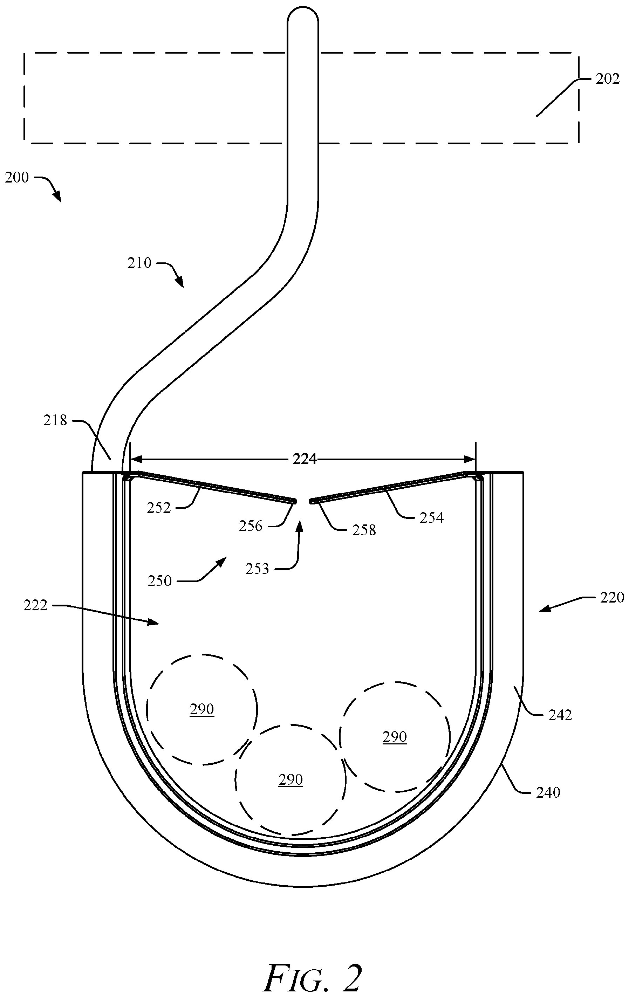

The following detailed description of example implementations of techniques and apparatuses for solar cable retention and routing components refers to the accompanying Drawings. In the Detailed Description, the first digit(s) of a reference character (e.g., call-out number) may correlate with the first figure number in which the reference character is labeled. For example, reference characters that start with a 2 (e.g., solar hanger 200, liner portion 240) may represent details first called out with respect to FIG. 2. Further, the same reference characters in different Drawings may identify the same or similar features, elements, and/or parts.

### DETAILED DESCRIPTION

Described herein are implementations of improved techniques and apparatuses for solar cable retention and routing components, each also referred to as a "solar hanger." This document describes solar hangers, techniques for manufacturing solar hangers, and techniques for using solar hangers. Aspects described herein address technical problems associated with the routing, securement, and/or connection of objects (e.g., electrical cables) to a support structure, for example a support structure of a photovoltaic system (e.g., at one or more of column supports, torque tubes, mounting brackets, and the like).

In one example, the solar cable retention and routing component (solar hanger) is an apparatus that includes a hanger portion configured to engage to a support structure. The hanger portion defines a cradle portion that is configured to receive and support an object. The apparatus includes a liner portion that includes a cover portion formed on at least a portion of the cradle portion and at least one retainer portion that extends from the cover portion and configured to retain the object in the cradle portion.

The disclosed solar hangers result in a simpler installation and routing of objects (e.g., electrical cables) to a supporting structure. For example, in use, an installer can attach a hook portion of a solar hanger onto the support structure of a photovoltaic system, with the solar hanger held in place by gravity. This operation permits installation to be quickly completed. In aspects, the disclosed solar hangers further facilitate secure holding and retaining of the objects within the cradle during installation procedures and during use.

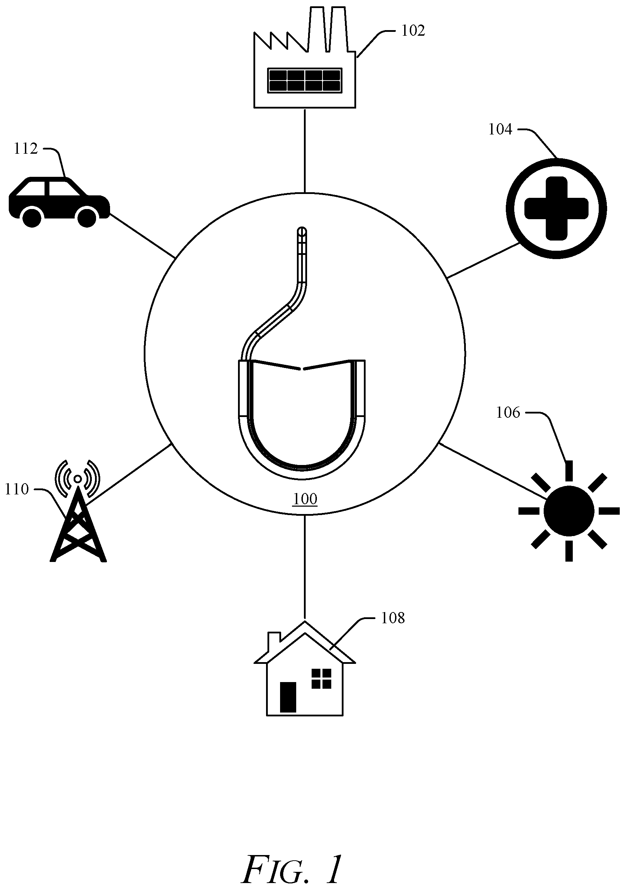

FIG. 1 is a schematic representation of solar cable retention and routing components 100 (solar hangers 100). As discussed herein, the solar hangers 100 may have particular application in the energy and utility markets 106 (e.g., for the routing and supporting bundles of objects in photovoltaic systems). While this disclosure, including the Drawings, references these markets, the solar hangers 100 may have application to bundles of objects in other markets, including but not limited to industrial and manufacturing markets 102, healthcare markets 104, consumer and commercial markets 108, telecommunications and data infrastructure markets 110, and/or transportation markets 112.

Industrial and manufacturing markets 102 include industrial automation and equipment, control panels, machine building, machinery, electrical enclosures, material handling systems (e.g., conveyors), cooling systems, heavy equipment (e.g., construction and mining machinery), agricultural technology (e.g., farming equipment), chemical (e.g., chemical processing equipment), robotics (e.g., automated robotic systems), original equipment manufacturers (OEMS), mechanical components, and mechanical systems. Healthcare markets 104 include medical equipment and technology, and dental equipment and technology. Energy and utility markets 106 include renewable energy systems (e.g., solar panels, solar arrays, wind turbines, hydroelectric generators), power generation and distribution, industrial lighting, and commercial lighting. Energy and utility markets 106 also include photovoltaic systems that include one or more panels (e.g., solar panels) of photovoltaic cells mounted on a support structure where the electrical output of the solar panels is transferred to the electrical grid or an electrical storage device (e.g., battery) through one or more electrical cables (photovoltaic cables).

Consumer and commercial markets 108 include appliances (e.g., home and commercial appliances), heating, ventilation, and air conditioning (HVAC), and consumer electronic devices. Telecommunications and data infrastructure markets 110 include telecommunications (e.g., general telecom services), communications (e.g., communication systems and equipment), internet service providers (ISPs), cable television companies (CATV), infrastructure for data storage and processing (e.g., data centers), broadband (e.g., broadband internet services), and datacom (e.g., data communications equipment). Transportation markets 112 include manufacturing and components for vehicles, trucks, automobiles, rail conveyances (e.g., trains), marine craft (e.g., ships, boats), aircraft, and aerospace.

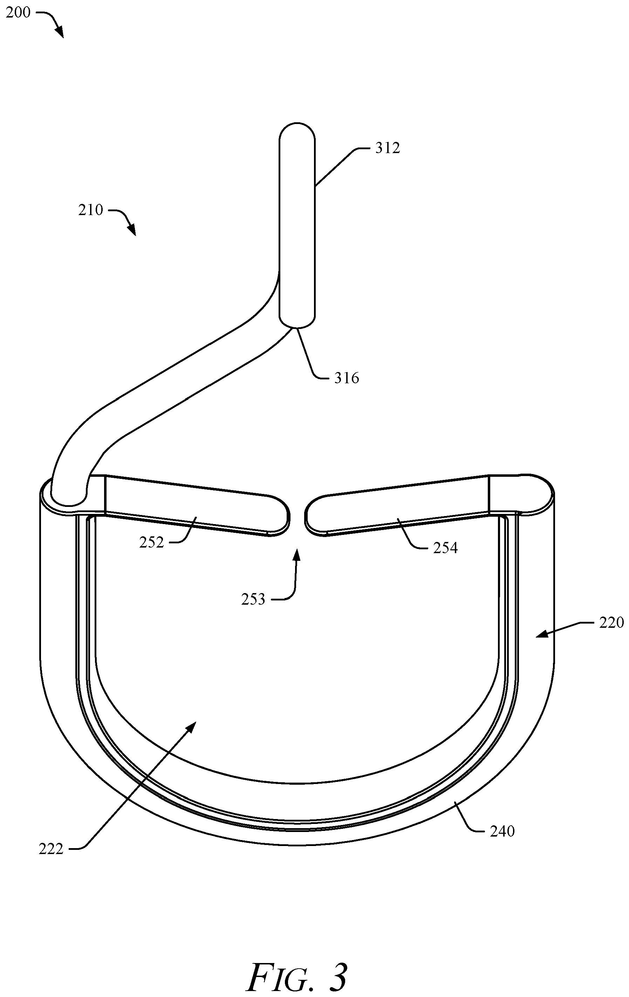

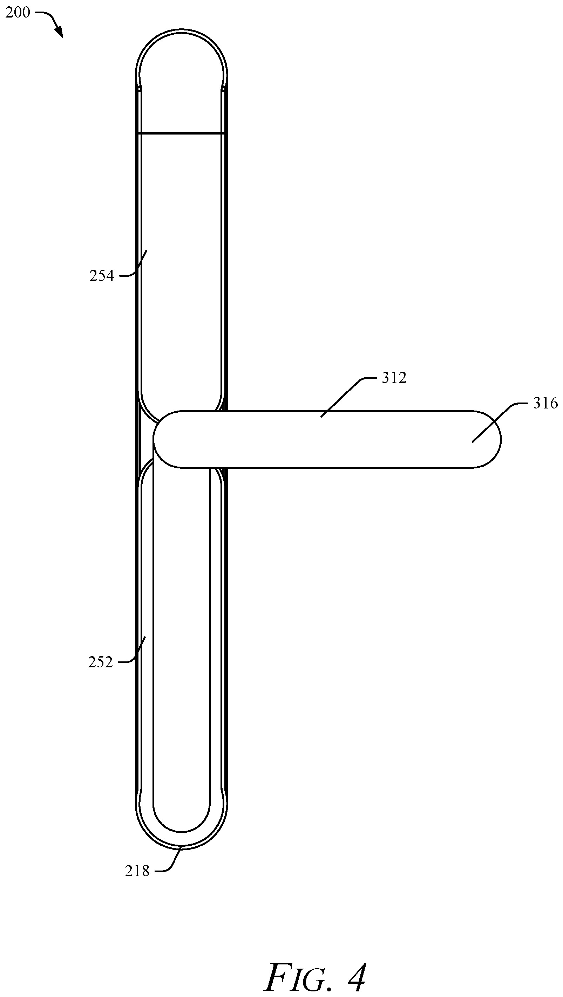

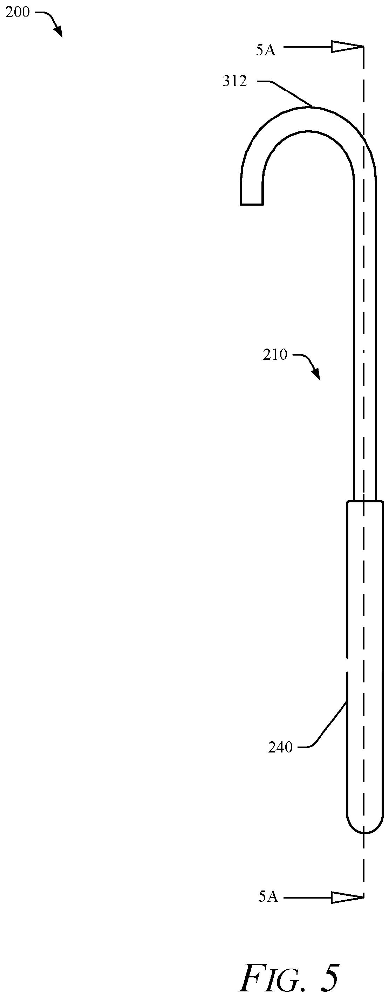

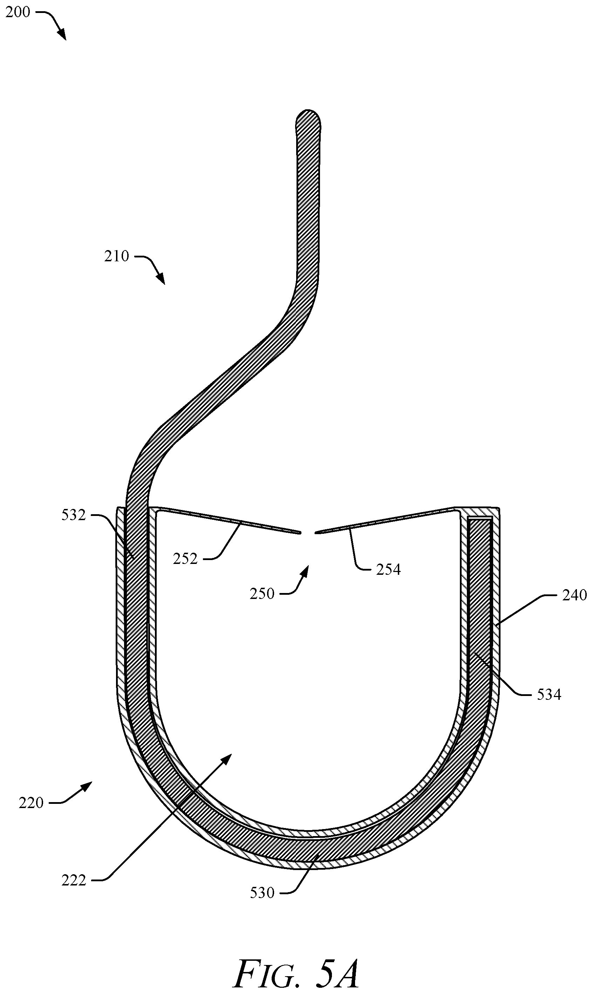

Referring now to FIGS. 2-5A, a second solar cable retention and routing component 200 (solar hanger 200) is illustrated. In these figures, FIG. 2 is a front side view of the solar hanger 200, FIG. 3 is a perspective view of the solar hanger 200, FIG. 4 is a top view of the solar hanger 200, FIG. 5 is a first side view of the solar hanger 200, and FIG. 5A is a sectional view of the solar hanger 200 along lines 5A-5A in FIG. 5. The solar hanger 200 is similar to the solar hanger 100 illustrated in FIG. 1 and described above, except as detailed below.

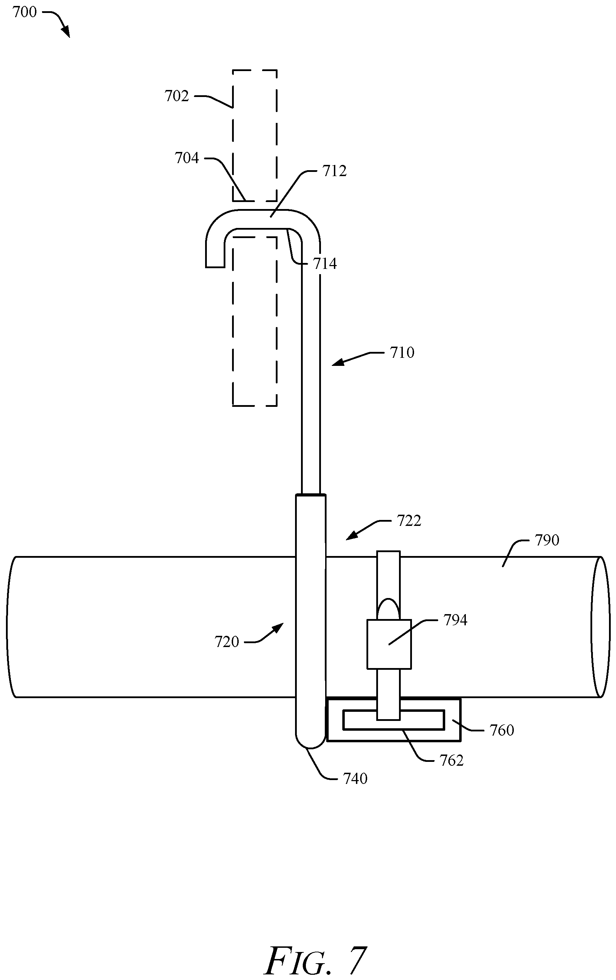

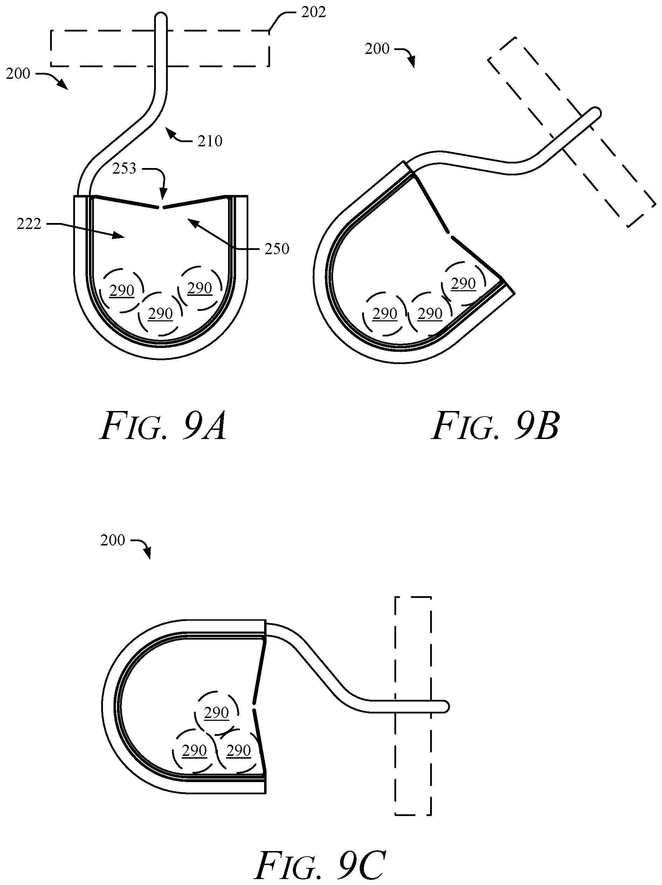

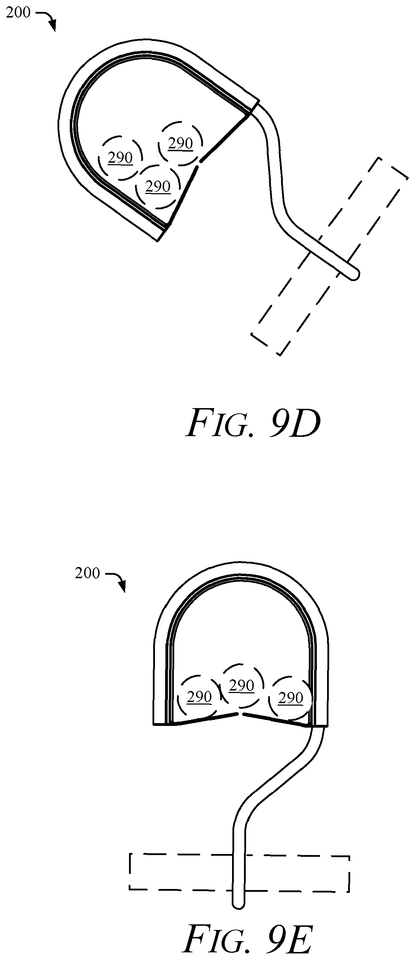

The solar hanger 200 includes a hanger portion 210 that is configured to engage to a support structure (e.g., support structure 202 illustrated in FIGS. 2 and 9, support structure 702 illustrated in FIG. 7). In this way, the solar hanger 200 may hang from the support structure by the hanger portion 210. As used herein, the term "hang" refers broadly to the hanger portion 210 in contact with the support structure 202. In example, the hanger portion 210 may be draped over the support structure, inserted into an aperture in the support structure, or otherwise connecting to, attaching to, and/or engaging the support structure. As used herein, the term "support structure" is used to refer to machines, cabinets, housings, frames, frame rails, enclosures, vehicle chassis, panels, rails, support beams, cable routing channels, conveyor channel assemblies, workpieces, and the like. In one example, a support structure of a photovoltaic system may include one or more column supports, torque tubes, mounting brackets, and the like. A support structure may include a mount surface and/or a mount aperture defined therein (e.g., a slot, a channel, a bore, a threaded hole), and the like. In FIG. 2, the support structure 202 is a torque tube of a photovoltaic system, which a hook portion 312 of the solar hanger 200 is hooked over and hangs from.

The hanger portion 210 of the solar hanger 200 defines a cradle portion 220 that is configured to support an object(s) 290. The hanger portion 210 provides support strength for holding the object(s) 290 in place and supporting the weight of the object. The cradle portion 220 includes a channel 222 that receives the object(s) 290. The cradle portion 220 defines an opening 224 that is oriented to receive the object(s) 290 into the channel 222. As used herein, the term "object" refers to all types and forms objects, including cables, electrical cables, wires, hydraulic lines, pneumatic lines, hoses, optical fiber, pipes, tubing, conduits, and bundles of one or more of the same.

The solar hanger 200 includes a liner portion 240 configured to line and/or cover at least a portion of the cradle portion 220 to support and/or space the object(s) 290 away from the cradle portion 220. The liner portion 240 may include a layer formed (e.g., conformally formed) along at least a portion of the cradle portion 220. The liner portion 240 is configured to distribute the weight of the object(s) 290 over a larger surface area. In this way, the object (e.g., the insulation on the object) is protected from wear damage.

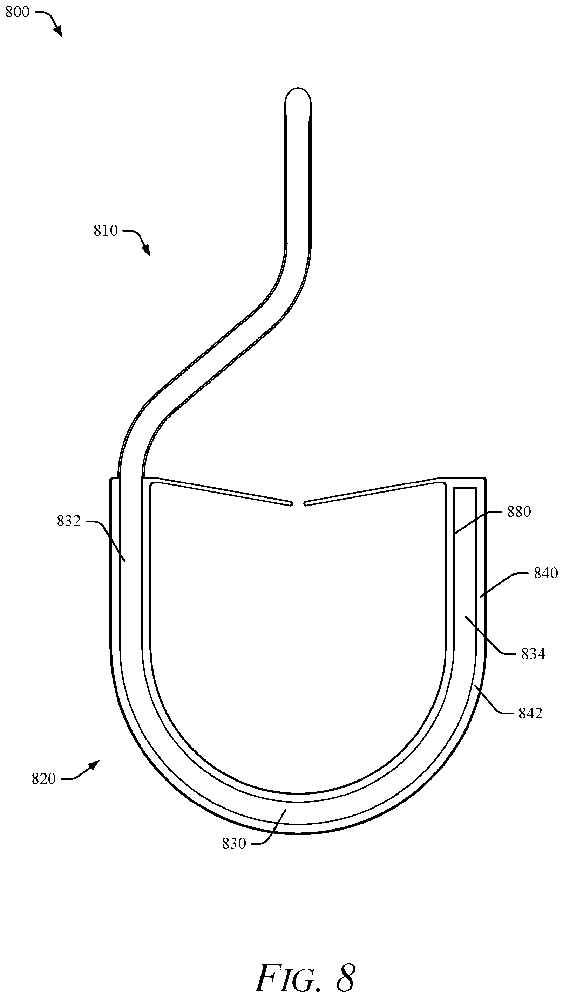

The hanger portion 210 may be formed of a suitable metallic substrate material and the liner portion 240 may be formed of a suitable polymeric material. In some aspects, including the aspect illustrated in FIGS. 2-5A, the liner portion 240 is molded (e.g., insert molded, overmolded) onto the cradle portion 220 through a molding process, as described herein. In other aspects, such as illustrated and described with respect to FIG. 8 below, the liner portion 840 formed (e.g., molded) separate from the cradle portion (e.g., cradle portion 820) and is configured to attach to the cradle portion 820.

The liner portion 240 includes a cover portion 242 formed on at least a portion of the cradle portion 220 and configured to cover at least a portion of the cradle portion 220. The liner portion 240 includes at least one retainer portion 250 that extends from the cover portion 242. The retainer portion 250 is configured to retain the object(s) 290 in the cradle portion 220. The retainer portion 250 extends out of the liner portion 240 to cover at least a portion of the opening 224 to retain the object(s) 290 in the cradle portion 220.

As illustrated in FIG. 5A, the cradle portion 220 extends through a portion of the liner portion 240 and includes a base portion 530 and a first arm 532 spaced apart from a second arm 534 (e.g., by the base portion 530). The first arm 532 and the second arm 534 may extend upwardly in a direction away from the base portion 530 and may extend substantially parallel to one another.

The retainer portion 250 includes at least one projection portion that extends from the liner portion 240. For example, the retainer portion 250 may include at least one of a first projection portion 252 that extends from the liner portion 240 spaced apart from the first arm 532 or a second projection portion 254 that extends from the liner portion 240 spaced apart from the second arm 534. At least one of the first projection portion 252 or the second projection portion 254 is flexible (e.g., resilient). The first projection portion 252 terminates in a first end 256 opposite the liner portion 240 and the second projection portion 254 terminates in a second end 258 opposite the liner portion 240. The first end 256 and the second end 258 are spaced apart.

The projection portion(s) 252, 254 (e.g., the first end 256 of projection portion 252 and the second end 258 of projection portion 254) may be spaced apart to define an entrance 253 to the channel 222. The entrance includes a width, which may be narrower than a diameter of the object(s) 290. The projection portion(s) are configured to flex to permit object(s) 290 to be passed through the entrance 253 and into the channel 222. The solar hanger 200 may be configured to permit the removal of one or more object(s) 290 from the channel 222 through the entrance 253 by an application of a manual force to at least one of the projection portions to widen the entrance 253 and permit the object(s) 290 to be passed through the entrance 253 and out of the channel 222. The first projection portion 252 may extend from the liner portion 240 obliquely to a plane of the first arm 532 and/or the second projection portion 254 may extend from the liner portion 240 obliquely to a plane of the second arm 534.

The channel 222 may be configured for gravity-fed loading, where the solar hanger 200 is oriented on the support structure 202 so that the opening of the channel 222 faces in an upward direction (e.g., an upward-facing orientation illustrated in FIG. 2). In the upward-facing direction, as object(s) 290 are loaded into the channel 222 (e.g., through entrance 253), the force of gravity may hold the object(s) 290 within the channel 222. The upward-facing orientation is also illustrated and described below with respect to FIG. 9A.

As object(s) 290 are inserted into the channel 222 thorough the entrance 253, one or more of the projection portion(s) 252, 254 may flex to permit the object(s) 290 to pass through the entrance 253. Upon the object(s) 290 passing through the entrance 253, the projection portion(s) 252, 254 may resiliently return to their original shape. In this way, upon the insertion of the object(s) 290 through the entrance 253, the object(s) 290 are retained in the channel 222.

The hanger portion 210 may include a hook portion 312 that is configured to engage the support structure 202. In aspects, the hook portion 312 is oriented perpendicularly to the cradle portion 220, for example, as illustrated in FIGS. 3 and 5. In this way, the solar hanger 200 may properly align object(s) 292 held in the channel 222 to a desired direction of travel. The hook portion 312 may include a curved top portion 514. In other aspects, a hook portion 312 may be U-shaped, round, or another shape, for example, the flat top portion 714 illustrated in FIG. 7 and described below. The hook portion 312 may be centered over the cradle portion 220, as illustrated in FIG. 4. The cradle portion 220 may be curved, as illustrated in FIGS. 2 and 5A. The hook portion 312 defines a first end 316 opposite a second end 218. The first end 316 is configured to engage the support structure 202 and the second end 218 is configured to support the cradle portion 220 at the first arm 532.

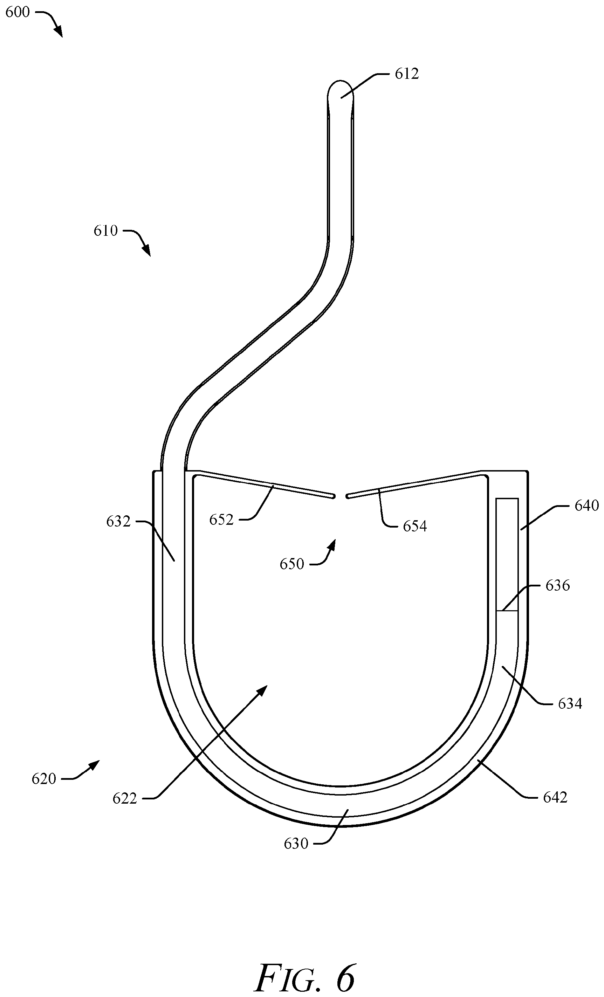

Referring now to FIG. 6, another solar cable retention and routing component 600 (solar hanger 600) is illustrated as a sectional view that is similar to sectional view FIG. 5A. The solar hanger 600 is similar to the solar hanger 200 illustrated in FIGS. 2-5A and described above, except as detailed below. Thus, the solar hanger 600 includes a hanger portion 610, a hook portion 612, a cradle portion 620, a channel 622, a base portion 630, a first arm 632, a second arm 634, a liner portion 640, a cover portion 642, a retainer portion 650, first projection portion 652, and a second projection portion 654. In the aspect illustrated in FIG. 6, the cradle portion 620 extends through a portion of the liner portion 640 but the second arm 634 terminates in a tip 636 and the liner portion 640 extends past the tip 636 of the second arm 634. In this way, a cost of manufacturing the solar hanger 600 may be lower by reducing the length of the hanger portion 610. In aspects, the liner portion 640 may be formed (e.g., molded) separate from the cradle portion 620 and is configured to attach to the cradle portion 620. For example, the liner portion may define a groove that conforms to the shape of the cradle portion. In this way, the cradle portion may be snapped or slid into the groove to attach the liner portion to the hanger portion. In aspects, a cradle portion may snap or slide into the groove from the side or from below.

Referring now to FIG. 7, another solar cable retention and routing component 700 (solar hanger 700) is illustrated. The solar hanger 700 is similar to the solar hanger 200 illustrated in FIGS. 2-5A and described above, except as detailed below. Thus, the solar hanger 700 includes a hanger portion 710, a hook portion 712, a cradle portion 720 including a channel, and a liner portion 740. The hook portion 712 may include a flat top portion 714. In other aspects, a hook portion 712 may be curved, U-shaped, round, or another shape. In FIG. 7, an object 790 is illustrated within the channel of the cradle portion 720. The liner portion 740 includes a strap connector 760 defining a strap pass-through 762 that is configured to receive a strap 794 (e.g., a cable tie) to secure the object 790 in the channel to the cradle portion 720. In this way, a strap 794 can be used to cinch the object 790 down, holding the object securely within the channel of the cradle portion 720. The hanger portion 710 is configured to engage to a support structure (e.g., support structure 702). In this illustration, the solar hanger 700 hangs from the support structure 702 by the hanger portion 710 through insertion into a mount aperture 704 (e.g., an opening or other hole that extends through a portion of a surface of a component) defined in the support structure 704.

Referring now to FIG. 8, another solar cable retention and routing component 800 (solar hanger 800) is illustrated. The solar hanger 800 is similar to the solar hanger 200 illustrated in FIGS. 2-5A and described above, except as detailed below. Thus, the solar hanger 800 includes a hanger portion 810, a cradle portion 820, a base portion 830, a first arm 832, a second arm 834, a liner portion 840, and a cover portion 842. The liner portion 840 formed (e.g., molded) separate from the cradle portion 820 and is configured to attach to the cradle portion 820. For example, the liner portion 840 may define a groove 880 that conforms to the shape of the cradle portion 820. In this way, the cradle portion 820 may be snapped or slid into the groove 880 to attach the liner portion 840 to the hanger portion 810. In aspects, a cradle portion 820 may snap or slide into the groove 880 from the side or from below.

FIGS. 9A-9E illustrate a sequence of rotation during an example installation of the solar hanger 200 of FIG. 2, for example where the support structure 202 is a torque tube rotationally mounted on a column support of a photovoltaic system with solar panels affixed to the torque tube. In such a configuration, the rotation of the torque tube facilitates the orientation of the solar panels; however the rotation of an attached solar cable retention and routing component (e.g., during installation, during rotation of the torque tube during operation) could result in electrical cables falling out of the cradle of the solar cable retention and routing component.

FIG. 9A shows the upward-facing orientation, which is also illustrated and described above with respect to FIG. 2. The channel 222 is configured for gravity-fed loading, where the solar hanger 200 is oriented on the support structure 202 so that the opening of the channel 222 faces in an upward direction. In the upward-facing orientation, as object(s) 290 are loaded into the channel 222 (e.g., through entrance 253), the force of gravity may hold the object(s) 290 within the channel 222. As the torque tube rotates, the opening of the channel 222 may transition to the upward-pitched orientation of FIG. 9B, to the side-facing orientation of FIG. 9C, to the downward-pitched orientation of FIG. 9D, and the downward-facing orientation of FIG. 9E. In these other orientations, the retainer portion 250 (e.g., first projection portion 252 of FIG. 2, second projection portion 254 of FIG. 2) may limit the movement of the object(s) 290 to keep the object(s) 290 within the channel 222.

Some additional examples of techniques and apparatuses for solar cable retention and routing components are as follows:
Example 1. An apparatus comprising: a hanger portion configured to engage to a support structure, the hanger portion defines a cradle portion configured to support an object; and a liner portion comprising a cover portion formed on at least a portion of the cradle portion and at least one retainer portion that extends from the cover portion and configured to retain the object in the cradle portion.
Example 2. The apparatus of example **1,** wherein the cradle portion includes a channel that receives the object and the cradle portion defines an opening oriented to receive the object into the channel.
Example 3. The apparatus of example 2, wherein the retainer portion extends out of the liner portion to cover at least a portion of the opening to retain the object in the cradle portion.
Example 4. The apparatus of example **1,** wherein: the cradle portion further comprises a first arm spaced apart from a second arm, and the retainer portion comprises at least one of: a first projection portion that extends from the liner portion spaced apart from the first arm; or a second projection portion that extends from the liner portion spaced apart from the second arm.
Example 5. The apparatus of example 4, wherein at least one of the first projection portion or the second projection portion are flexible.
Example 6. The apparatus of example **1,** wherein the hanger portion is configured to engage the support structure through a hook portion and the hook portion is oriented perpendicularly to the cradle portion.
Example 7. The apparatus of example 6, wherein the hook portion includes at least one of: a flat top portion and the cradle portion is curved; or a curved top portion and the cradle portion is curved.
Example 8. The apparatus of example 6, wherein the hook portion is centered over the cradle portion.
Example 9. The apparatus of example 1, wherein: the cradle portion further comprises a base portion, a first arm, and a second arm, the first arm spaced apart from the second arm; and the retainer portion further comprises a first projection portion that extends from the liner portion spaced apart from the first arm.
Example 10. The apparatus of example 9, wherein the hanger portion is configured to engage the support structure through a hook portion that defines a first end opposite a second end, the first end configured to engage the support structure, and the second end configured to support the cradle portion at the first arm.
Example 11. The apparatus of example 9, wherein the second arm terminates in a tip and the liner portion extends past the tip of the second arm.
Example 12. The apparatus of example 9, wherein the retainer portion further comprises a second projection portion that extends from the liner portion spaced apart from the second arm, the first projection portion terminates in a first end opposite the liner portion, the second projection portion terminates in a second end opposite the liner portion, and the first end and the second end are spaced apart.
Example 13. The apparatus of example 9, wherein the retainer portion further comprises a second projection portion that extends from the liner portion spaced apart from the second arm and the first projection portion extends from the liner portion obliquely to a plane of the first arm and the second projection portion extends from the liner portion obliquely to a plane of the second arm.
Example 14. The apparatus of example 1, wherein the cradle portion comprises a base portion, a first arm, and a second arm, the first arm spaced apart from the second arm.
Example 15. The apparatus of example 14, wherein the retainer portion comprises: a first projection portion that extends from the first arm; and a second projection portion that extends from the second arm.
Example 16. The apparatus of example 14, wherein the first arm and the second arm upwardly extend in a direction away from the base portion and are substantially parallel to one another.
Example 17. The apparatus of example 1, wherein the hanger portion comprises a metallic substrate material and the liner portion comprises a polymeric material.
Example 18. The apparatus of example 17, wherein the liner portion is molded onto the hanger portion.
Example 19. The apparatus of example 17, wherein the liner portion is configured to snap onto the hanger portion.
Example 20. The apparatus of example 1, wherein the cradle portion includes a channel that receives the object and the liner portion includes a strap connector configured to receive a strap to secure the object in the channel to the cradle portion.

One or more of the parts (e.g., hanger portion, cradle portion, liner portion) of the disclosed solar hangers may be integrally formed of a suitable material(s) through a suitable fabrication technique. The term "integrally formed" is used in this disclosure to describe elements that are formed in one piece (a single, unitary piece) and cannot be separably removed from each other without causing permanent structural damage to the piece. Suitable fabrication techniques may include one or more of an injection-molding process, an insert molding process, an overmolding process, an additive manufacturing process (e.g., a fused deposition modeling (FDM) process, a three-dimensional (3D) printing process), or another suitable process. In an example injection-molding process (e.g., a multi-shot injection molding process), a heated, molten material is forced into a mold cavity to create a desired shape. In an example insert molding process, a pre-fabricated part (e.g., insert) is placed within a mold cavity before molten material is forced into the mold cavity and molded around the insert. In an example overmolding process, a polymeric material is injected into a mold cavity into which at least a portion of a substrate is positioned and the polymeric material is overmolded over at least a portion of the substrate. The overmolding process may be a multi-material molding process (e.g., a multi-shot injection molding process) where the substrate is molded first, the injection molding cavity of the substrate mold is altered or the substrate is moved to a second mold, and a polymeric material (e.g., the same polymeric material, a different polymeric material) is injected into the mold to bond to at least a portion of the substrate and form the molded part. As used herein, the phrase "overmolded over" includes overmolded onto and/or overmolded into. In an example additive manufacturing process, three-dimensional (3D) objects are formed by depositing materials layer-by-layer. In implementations, one or more of the parts (e.g., hanger portion, cradle portion, liner portion) of the disclosed solar hangers can be assembled from separate parts and fixed together through welding, solvents, adhesives, and the like.

The parts of the solar hangers may be fabricated of any suitable material, including, but not limited to, a metal (e.g., a metallic substrate material), a ceramic, a polymer (e.g., a polymeric material), and/or a composite. One or more of the parts of the disclosed solar hangers may be formed of the same material as the other parts, or of a different material than the other parts.

Suitable polymeric materials may include one or more of polyamide (PA), polypropylene (PP), polyethylene (PE), polyphenylene sulfide (PPS), polyether ether ketone (PEEK), polyaryletherketone (PAEK), ethylene tetrafluoroethylene (ETFE), polyacetal (POM), polybutylene terephthalate (PBT), ultraviolet stabilized polyacetal (POMUV), acrylonitrile styrene acrylate (ASA), cross-linked thermoplastics, partially cross-linked thermoplastics, higher-temperature resins, ultraviolet (UV) resistant resins, other thermoplastic materials, and the like, and copolymers, blends, or alloys thereof)) as well as fiber reinforced materials. A suitable polymeric material may include one or more additives (e.g., heat stabilizers (e.g., copper iodide), impact modifiers (e.g., polyolefin, urethane, rubber), UV stabilizers (e.g., carbon black, hindered amine light stabilizers (HALS)), flame retardants (e.g., nitrogen-based halogen-free flame retardants, melamine cyanurate, melamine borate, ammonium polyphosphate), colorants, and the like). The polymeric material may be wear resistant.

Suitable metallic substrate materials may be formed by a suitable process, including one or more of machining, stamping, die-casting, forging, and the like. The surface of a suitable metallic substrate material may be prepared for bonding with a polymeric material through a suitable process, including one or more of cleaning, degreasing, chemical etching, plasma treating, abrasive blasting, or applying a chemical coating. Suitable metallic substrate materials include aluminum, aluminum alloys, stainless steel, brass alloys, copper alloys, titanium, titanium alloys, zinc, zinc alloys, alloys of the same, and the like. In aspects, the metallic substrate material is a corrosion resistant metallic substrate material.

Unless context dictates otherwise, use herein of the word "or" may be considered use of an "inclusive or," or a term that permits inclusion or application of one or more items that are linked by the word "or" (e.g., a phrase "A or B" may be interpreted as permitting just "A," as permitting just "B," or as permitting both "A" and "B"). Also, as used herein, a phrase referring to "at least one of" a list of items refers to any combination of those items, including single members. For instance, "at least one of a, b, or c" can cover a, b, c, a-b, a-c, b-c, and a-b-c, as well as any combination with multiples of the same element (e.g., a-a, a-a-a, a-a-b, a-a-c, a-b-b, a-c-c, b-b, b-b-b, b-b-c, c-c, and c-c-c, or any other ordering of a, b, and c). Further, items represented in the accompanying Drawings and terms discussed herein may be indicative of one or more items or terms, and thus reference may be made interchangeably to single or plural forms of the items and terms in this disclosure.

In this description of aspects of solar hangers, ordinal numbers such as "first" and "second" are used only to distinguish between different described objects and have no limitation on a location, a sequence, a priority, a quantity, content, or the like of the described objects. For example, a "first arm" is used as an example, and there may be one or more "arms." Additionally, objects modified by different ordinal numbers may be the same or different objects. For example, if the described object is an "arm," a "first arm" and a "second arm" may be the same or different arms.

In aspects, techniques and apparatuses for solar cable retention and routing components may include one or more of the features of the techniques and apparatuses illustrated in the Drawings and described herein. Although implementations for techniques and apparatuses for solar cable retention and routing components have been described in language specific to certain features and/or methods, the subject of the appended claims is not necessarily limited to the specific features or methods described. Rather, the specific features and methods are disclosed as example implementations of techniques and apparatuses for solar cable retention and routing components.

## Claims

1. An apparatus comprising:
a hanger portion configured to engage to a support structure, the hanger portion defines a cradle portion configured to support an object; and
a liner portion comprising a cover portion formed on at least a portion of the cradle portion and at least one retainer portion that extends from the cover portion and configured to retain the object in the cradle portion.

2. The apparatus of claim 1, wherein the cradle portion includes a channel that receives the object and the cradle portion defines an opening oriented to receive the object into the channel.

3. The apparatus of claim 2, wherein the retainer portion extends out of the liner portion to cover at least a portion of the opening to retain the object in the cradle portion.

4. The apparatus of any one of the preceding claims, wherein:
the cradle portion further comprises a first arm spaced apart from a second arm, in particular also a base portion.

5. The apparatus of claim 4, wherein the hanger portion is configured to engage the support structure through a hook portion that defines a first end opposite a second end, the first end configured to engage the support structure, and the second end configured to support the cradle portion at the first arm.

6. The apparatus of any one of claims 4 to 5, wherein the second arm terminates in a tip and the liner portion extends past the tip of the second arm.

7. The apparatus of any one of the preceding claims, wherein:
the retainer portion comprises at least one of:
a first projection portion that extends from the liner portion spaced apart from the first arm; or
a second projection portion that extends from the liner portion spaced apart from the second arm.

8. The apparatus of claim 7, wherein at least one of the first projection portion or the second projection portion are flexible.

9. The apparatus of any one of claims 7 or 8, wherein the first projection portion terminates in a first end opposite the liner portion, the second projection portion terminates in a second end opposite the liner portion, and the first end and the second end are spaced apart.

10. The apparatus of any one of claims 4 to 6 in combination with any one of claims 7 to 9, wherein the first projection portion extends from the liner portion obliquely to a plane of the first arm and the second projection portion extends from the liner portion obliquely to a plane of the second arm.

11. The apparatus of claim 4 to 6, wherein the retainer portion comprises:
a first projection portion that extends from the first arm; and
a second projection portion that extends from the second arm,
in particular with the first arm and the second arm upwardly extend in a direction away from the base portion and are substantially parallel to one another.

12. The apparatus of any one of the preceding claims, wherein the hanger portion is configured to engage the support structure through a hook portion and the hook portion is oriented perpendicularly to the cradle portion, preferably with the hook portion being centered over the cradle portion.

13. The apparatus of claim 12, wherein the hook portion includes at least one of:
a flat top portion and the cradle portion is curved; or
a curved top portion and the cradle portion is curved.

14. The apparatus of any one of the preceding claims, wherein the hanger portion comprises a metallic substrate material and the liner portion comprises a polymeric material, in particular with the liner portion molded onto the hanger portion and/or with the liner portion is configured to snap onto the hanger portion.

15. The apparatus of any one of the preceding claims, wherein the cradle portion includes a channel that receives the object and the liner portion includes a strap connector configured to receive a strap to secure the object in the channel to the cradle portion.
